# EUROPEAN PATENT SPECIFICATION

(11) **EP 1 613 681 B1**
(45) Date of publication and mention of the grant of the patent: **26.03.2008**
(21) Application number: 04725679.7
(22) Date of filing: 05.04.2004
(51) Int. Cl.: C08G 63/193, C08J 5/18, G02B 1/04

(54) **OPTICAL MEDIA COMPRISING POLYMERIC MATERIAL FILM**
OPTISCHE MEDIEN, DIE EINEN FILM AUS POLYMERISCHEM WERKSTOFF ENTHALTEN
SUPPORT OPTIQUE COMPRENANT UN FILM DE MATIERE POLYMERE

(30) Priority: 11.04.2003 IT SV20030018
(43) Date of publication of application: 11.01.2006
(73) Proprietor: Ferrania Technologies S.p.A., 17014 Ferrania/Cairo Montenotte (IT)
(72) Inventor: ANGIOLINI, S.; c/o Ferrania S.p.A., I-17014 Ferrania/Cairo Montenotte (IT); AVIDANO, M.; c/o Ferrania S.p.A., I-17014 Ferrania/Cairo Montenotte (IT)
(74) Representative: Bottero, Claudio
(86) International application number: PCT/EP2004/003581
(87) International publication number: WO 2004/090012

(56) References cited:
- EP-A- 0 943 640
- EP-A- 1 205 772
- WO-A-92/03493
- US-A- 5 115 372
- DATABASE WPI Section Ch, Week 199721 Derwent Publications Ltd., London, GB; Class A23, AN 1997-231217 XP002288584 & JP 09 071640 A (TOYOBO KK) 18 March 1997 (1997-03-18) cited in the application
- DATABASE WPI Section Ch, Week 199135 Derwent Publications Ltd., London, GB; Class A23, AN 1991-257244 XP002288585 & JP 03 168211 A (UNITIKA LTD) 22 July 1991 (1991-07-22)
- DATABASE WPI Section Ch, Week 200116 Derwent Publications Ltd., London, GB; Class A23, AN 2001-150728 XP002288586 & JP 2000 273160 A (UNITIKA LTD) 3 October 2000 (2000-10-03)

## Description

### FIELD OF THE INVENTION

The present invention relates to an optical media comprising an high quality polymeric material film. More in particular, the present invention relates to an optical media comprising a polymeric material film having resistance to ageing and UV radiation.

### BACKGROUND OF THE INVENTION

Flat-panel displays (FPD) are becoming increasingly commonplace in today's commercial electronic devices. FPD in most of their applications are expected to be lightweight, portable, rugged, low-power and high-resolution. Displays having all these attributes will enable a wide variety of commercial applications in the future.

Most commercially available products use glass as the starting material in the display fabrication process. Glass has been widely used for several optical applications, due to its excellent characteristics, such as the transparency, the optical clarity, the high transparence in the visible light range, the high resistance to temperature and the compatibility with chemicals used in standard semiconductor manufacturing processing. Notwithstanding, due to its high weight and high brittleness, the use of glass as support in optical applications may cause problems to the final product realization. In addition, because glass is not flexible, it cannot be used in continuous processing, this leading to a relatively low final productivity.

In view of these reasons, it should be desirable to replace glass with transparent plastic films. If plastic is employed as the starting material for display manufacturing, a display that is not only lightweight and rugged but also flexible can be obtained. The realization of such a technology would have a significant impact on the display industry replacing the present sheet processes with a continuous roll-to-roll manufacturing process.

The actual process involved in the display manufacturing are designed to work with the glass support that has excellent thermo-mechanical and optical properties and that can withstand high temperature processes, solvent treatments and UV-visible light exposure without significant changes in its properties.

Typical display manufacturing processes, such as those to manufacture liquid crystal display (LCD) and organic light emitting diode (OLED), having an active matrix (AM) or a passive matrix (PM), use the glass as support, at present. The glass is the starting point for the manufacturing process which comprises the coating of different functional layers which can vary according to the desired kind of display. Metals or metal oxides such as silicon or indium tin oxide (ITO) are coated on the glass by sputtering or vacuum deposition, for instance, and then treated by thermal, laser or chemical treatment to form the driving circuit of the display. In case of high performance driving circuits (TFT, for example) these processes are carried out on glass at a temperature of about 600°C. Recent developments have reduced this temperature to about 250-350°C by laser technique.

Most of the plastic materials available in the market, in spite of having optical properties that match the requirements for applications as support for display, have glass transition temperature lower than 240°C and this make them useless in the above mentioned processes. US 5,817,550 and US 5,856,858 describe a method for the formation of thin film transistors on low-temperature plastic substrates. The methods includes the substrate to be coated on both sides by 0.1-5.0 microns of SiO₂ as first step in the manufacturing process. This allow the film to withstand the high temperature required by the TFT assembly. N.D. Young et Al., Low Temperature Poly-Si on Glass and Polymer Substrates, ASIA DISPLAY Workshop, 1998 describe the fabrication of polycrystalline silicon TFT on polymer supports. Thermal stability up to 250-350°C is required to the polymer substrate in order to obtain TFT's circuits with good properties, such as high mechanical properties and low thermal shrinkage rate to guarantee a good stability and self-sustaining properties during the construction processes. Further, protective layers are needed to increase the resistance to chemicals and solvents during displays manufacturing steps.

High mechanical properties are needed to obtain a self-supporting film during the device assembly and its use. Eventually, a good resistance to the UV-visible light exposure without remarkable degradation (support embrittlement and colour changes) is required to withstand the process steps where UV sources can be used and to prevent degradation in sunlight environment applications.

Other problems are related to the stability during time of the displays. Active materials used in displays are extremely sensitive to oxidation and then to the presence of oxygen and moisture in the internal side of the displays. High barrier properties against said oxygen and moisture The glass accordingly provides a suitable impermeability level for this kind of applications, while, on the contrary, the plastic generally is too permeable. This problem, together with the resistance to chemicals and scratches is solved by adding suitable functional layers to the surface of the plastic film. Most common anti-scratches layers and barrier layers are based on UV-photocurable materials and this makes the substrate UV resistance one of the main required properties for the potential plastic support for optical devices. US 6,358,570, US 6,268,695 and US 6,413,645 disclose barrier layers coated on the plastic film. The main application is as plastic support for displays where high barrier properties to moisture and oxygen are required. The barrier structure is a multilayered composition of curable resins and inorganic compounds. The resins can be cured by UV radiation.

Several patents and patent applications describe fluorene polyester materials for electrical applications.

US Patent 3,546,165 describes thermally stable polyesters of various gem-bisphenols and dicarboxylic acids. Included are polyesters of 9,9-bis(4-hydroxyphenyl)fluorene with 100% isophthalic acids and 9,9-bis(4-hydroxyphenyl)fluorene with 80%wt isophthalic acid and 20%wt terephthalic acids. Softening temperature of 360°C for both these polymers are reported. UV stability and mechanical properties have not been evaluated.

US Patent 4,387,209 describes polyesters made by reacting 9,9-bis-(4-hydroxyphenyl)-fluorene with at least one member of the group consisting of isophthalic or terephthalic acid and using an interfacial polymerization process. The polyester inherent viscosity strongly depends upon the monomer purity and relatively small variations in purity of the diphenol monomer may cause large deviations in the inherent viscosity values. Polyester films are described to be used in the electrical insulation field, and neither data on optical properties nor possible applications are reported.

US 4,967,306 discloses a 9,9-bis-(4-hydroxyphenyl)-fluorene/isophthalic and terephthalic acid polyester which contains a very low level of low molecular weight oligomers and has a tensile strength, elongation, chemical resistance, temperature stability, ultraviolet resistance and vacuum stability higher than the known in the art copolymers containing low molecular weight oligomeric species. It is disclosed therein that films containing small amounts of oligomer will yellow or degrade upon limited exposure to ultraviolet radiation.

The resin obtained from the polyarylate composed of 9,9-bis-(3-methyl-4-hydroxyphenyl)-fluorene and isophthalic acid reported in Journal of Applied Polymer Science, Vol. 29, p. 35 to 43 (1984) results to be too fragile and has insufficient abrasion resistance and low film quality.

Japanese Patent Application No. 09-071,640 discloses a resin composed of (a) an aromatic dicarboxylic acid, (b) a specific amount of a substituted 9,9-bis-(4-hydroxyphenyl)-fluorene and (c) an aliphatic glycol; said resin is utilized in optical materials for its good transparency and heat resistance.

US 4,810,771 discloses polyesters made of mono-ortho substituted bisphenols, and a blend of isophthalic and terephthalic acid.

EP Patent Application 943,640 describes a film prepared with polyarylates synthesized using bisphenolfluorenes mono- and bi-substituted in the ortho position with alkyl (C1-C4) groups. Such polyarylates have a better stability to ultraviolet radiation.

9,9-bis(3,5-dibromo-4-hydroxyphenyl)-fluorene bisphenol monomer derived polyarylates have been disclosed in PCT Patent Application No. WO 00-33,949 as gas-separation membranes.

In US 5,007,945, there is described a polyarylate class obtained from dicarboxylic acid chlorides and cardo bisphenols having halo-substituents on all ortho positions of the phenol groups, which is used to separate one or more components of a gas mixture. Such patents describe gas-separation membranes, but do not mention optical films consisting of such polymers,

The present invention describe a plastic film suitable for optical applications and more preferably as a display support, able to withstand to the present manufacturing processes and to the environmental conditions during its use. Also, the use of a flexible plastic support will allow to introduce roll-to-roll technologies in the manufacturing of displays.

### SUMMARY OF THE INVENTION

An optical media comprising a polymeric material film, characterized in that said polymeric material is a polyester obtained from a 9,9-bis(4-hydroxyphenyl)fluorene derivative and a mixture of terephthalic acid and isophthalic acid derivatives represented by the following structure: 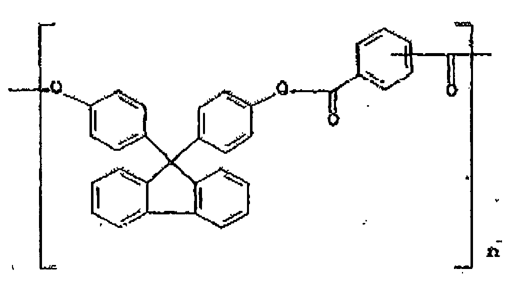 wherein n is a positive integer higher than 20,
said polymeric material having an inherent viscosity lower than 0.80 dl/g evaluated for solution of 0.1000 g dry polymer in 50ml of a mixture of phenol/1,1,2,2-tetrachloroethane 60/40 % by weight and a yellowing coefficient Yc lower than 0.0050.

### DETAILED DESCRIPTION OF THE INVENTION

Preferably, the present invention refers to an optical film comprising a polyester obtained from 9,9-bis-(4-hydroxyphenyl)-fluorene and from a mixture of isophthalic acid and terephthalic acid. The mixture of isophthalic acid and terephthalic acid preferably comprises from 10 to 90% by weight of an isophthalic group and from 90 to 10% by weight of a terephthalic group; more preferably, the mixture of isophthalic acid and terephthalic acid comprises from 20 to 80% by weight of an isophthalic group and from 80 to 20% by weight of a terephthalic group; most preferably, the mixture of isophthalic acid and terephthalic acid comprises from 30 to 70% by weight of an isophthalic group and from 70 to 30% by weight of a terephthalic group.

When in the present invention the term "group" is used to describe a chemical compound or substituent, the described chemical material comprises the group, ring and base residue and that group, ring or residue with conventional substituents. When on the contrary the term "unit" is used, on the un-substituted chemical material is intended to be included. For instance, the term "alkyl group" comprises not only those alkyl units, such as methyl, ethyl, butyl, octyl, etc., but also those units bearing substituents such as halogen, nitrile, hydroxy, nitro, amino, carboxy, etc. The term "alkyl unit" on the contrary comprises only methyl, ethyl, cyclohexyl, etc.

The polymeric material useful in the present invention has excellent resistance to ageing and to UV radiation and is less subject to yellowing upon exposure to UV-visible light sources. More in particular, the polymeric material shows a inherent viscosity lower than 0.80 dl/g, preferably lower than 0.70 dl/g, and more preferably in the range of from 0.65 to 0.30 dl/g.

The polymeric material of the present invention can replace glass support in the manufacturing of a number of optical media known in the art, such as liquid crystal displays, electroluminescent displays, organic light-emitting diode displays, and the like. This allows to obtain more flexible and resistant displays than those conventionally manufactured using glass supports. Also, the use of the polymeric material of the present invention allows to use roll-to-roll technologies in the manufacturing of displays.

### EXAMPLES

Sample films were obtained by taking compound A and polymerizing it with the interfacial polycondensation technique as described In EP patent 396,418, utilizing a mixture of terephthalic acid (TPA) and isophthalic acid (IPA) and obtaining different inherent viscosity values as reported in the following Table 1. The so-obtained polymer was coated with the solvent coating technique using a 10% weight methylene chloride solution of the polymer. The resulting film having a thickness of 100 µm was then dried for 3 hours at a temperature of 25°C, gradually increasing the temperature up to a maximum of 160°C. The inherent viscosity of each sample was measured with a viscosimeter SCHOTT GERATE AVS400 equipped with bath thermal control HAAKE D8 and a capillary-viscometer SCHOTT Ubbelohde 53113 Ic. Viscosity has been evaluated for solution of 0.1000 g dry polymer in 50ml of a mixture of phenol/1,1,2,2-tetrachloethane 60/40 % by wt. The data related to inherent viscosity of each sample are reported in the following Table 1.

**TABLE 1**

| Sample film | % TPA | % IPA | Inherent Viscosity dl/g |
|---|---|---|---|
| 1 (comparison) | 50 | 50 | 2.12 |
| 2 (comparison) | 0 | 100 | 0.77 |
| 3 (comparison) | 100 | 0 | 0.94 |
| 4 (invention) | 50 | 50 | 0.31 |
| 5 (comparison) | 0 | 100 | 0.42 |
| 6 (comparison) | 100 | 0 | 0.63 |

Film samples were then subjected to UV ageing tests by using a Fusion F300 Lamp System produced by Fusion UV Systems Inc. equipped with a D bulb.

Sample film yellowing was measured by comparing their absorbance, before and after the expositions, at the selected wavelength of 400nm which was identified as the most significant (blue light absorption). Optical absorbance was measured by a Pekin-Elmer Lambda 2 spectrophotometer working in the 320-500 nm range. The Yellowing Coefficient (Yc) is defined as the ratio of the averaged variation of absorbance of a polymeric film exposed to a UV radiation source and the effective exposure energy. The exposure energy employed was up to 5.0 J/cm² The lower the value, the best the result.

The results were summarized in the following Table 2.

**TABLE 2**

| Sample | Yellowing Coefficient Yc |
|---|---|
| 1 (comparison) | 0.0059 |
| 2 (comparison) | 0.0031 |
| 3 (comparison) | 0.0069 |
| 4 (invention) | 0.0043 |
| 5 (comparison) | 0.0013 |
| 6 (comparison) | 0.0047 |

The data of Table 2 showed that good or optimal values (i.e., lower than 0.0050) of Yellowing Coefficient can be obtained with film samples of the present invention having a inherent viscosity lower than 0.80 dl/g.

While a particular embodiment has been set forth to exemplify and explain the principles of the invention, such are not intended to be limiting. Modifications and changes may become apparent to those skilled in the art, and it is intended that the invention be limited only by the scope of the appended claims.

## Claims

1. An optical media comprising a polymeric material film, **characterized in that** said polymeric material is a polyester obtained from a 9,9-bis(4-hydroxyphenyl)fluorene derivative and a mixture of terephthalic acid and isophthalic acid derivatives represented by the following structure: 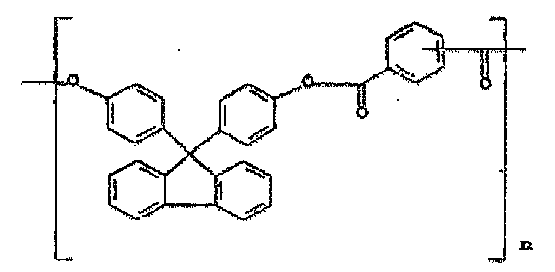 wherein n is a positive integer higher than 20,
said polymeric material having an inherent viscosity lower than 0.80 dl/g evaluated for solution of 0.1000 g dry polymer in 50ml of a mixture of phenol/1,1,2,2-tetrachloroethane 60/40 % by weight and a yellowing coefficient Yc lower than 0.0050.

2. The optical media according to claim 1, **characterized in that** said polymeric material having an inherent viscosity lower than 0.70 dl/g.

3. The optical media according to claim 1, **characterized in that** said polymeric material having an inherent viscosity in the range from 0.65 to 0.30 dl/g.

4. The optical media according to claim 1, **characterized in that** said polyester is obtained from 9,9-bis(4-hydroxyphenyl)fluorene and a mixture of terephthalic acid and isophthalic acid.

5. The optical media according to claim 4, **characterized in that** said mixture of terephthalic acid and isophthalic acid comprises from 20 to 80% by weight of an isophthalic group and from 80 to 20% by weight of a terephthalic group.

6. The optical media according to claim 4, **characterized in that** said mixture of terephthalic acid and isophthalic acid comprises from 30 to 70% by weight of an isophthalic group and from 70 to 30% by weight of a terephthalic group.

## Patentansprüche

1. Optisches Medium, umfassend einen Film aus polymerem Material, **dadurch gekennzeichnet, dass** das polymere Material ein Polyester ist, erhalten aus einem 9,9-Bis(4-hydroxyphenyl)fluoren-derivat und einer Mischung aus Terephthalsäure- und Isophthalsäure-Derivaten, dargestellt durch die folgende Struktur: 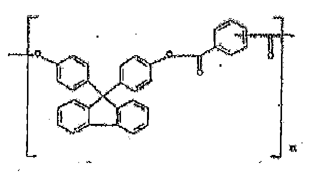 wobei n eine positive ganze Zahl größer als 20 ist,
wobei das polymere Material eine inhärente Viskosität, die niedriger als 0.80 dl/g ist, bewertet für eine Lösung aus 0,1000 g trockenes Polymer in 50 ml einer Mischung aus Phenol/1,1,2,2-Tetrachlorethan 60/40 Gew.%, und einen Vergilbungskoeffizient ("yellowing coefficient") Yc hat, der niedriger als 0,0050 ist.

2. Optisches Medium nach Anspruch 1, **dadurch gekennzeichnet, dass** das polymere Material eine inhärente Viskosität hat, die niedriger als 0,70 dl/g ist.

3. Optisches Medium nach Anspruch 1, **dadurch gekennzeichnet, dass** das polymere Material eine inhärente Viskosität im Bereich von 0,65 bis 0,30 dl/g hat.

4. Optisches Medium nach Anspruch 1, **dadurch gekennzeichnet, dass** der Polyester aus 9,9-Bis(4-hydroxyphenyl)fluoren und einer Mischung aus Terephthalsäure und Isophthalsäure erhalten wird.

5. Optisches Medium nach Anspruch 4, **dadurch gekennzeichnet, dass** die Mischung aus Terephthalsäure und Isophthalsäure von 20 bis 80 Gew.% einer Isophthalsäuregruppe und von 80 bis 20 Gew.% einer Terephthalsäuregruppe umfaßt.

6. Optisches Medium nach Anspruch 4, **dadurch gekennzeichnet, dass** die Mischung aus Terephthalsäure und Isophthalsäure von 30 bis 70 Gew.% einer Isophthalsäuregruppe und von 70 bis 30 Gew.% einer Terephthalsäuregruppe umfaßt.

## Revendications

1. Un support optique comprenant un film de matière polymère, **caractérisé en ce que** ladite matière polymère est un polyester obtenu à partir d'un dérivé de 9,9-bis (4-hydroxyphényl) fluorène et un mélange de dérivés d'acide téréphthalique et d'acide isophthalique représentés par la structure suivante : 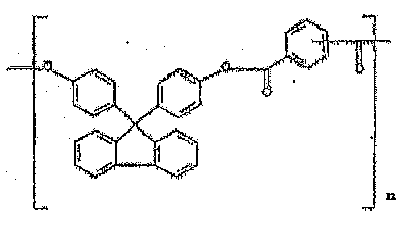 dans laquelle n est un nombre entier positif supérieur à 20, ladite matière polymère ayant une viscosité inhérente inférieure à 0,80 dl/g évaluée pour une solution de 0,1000g de polymère sec dans 50ml d'un mélange de phénol/1, 1, 2, 2-tétrachloroéthane de 60/40% en poids et un coefficient de jaunissement Yc inférieur à 0,0050.

2. Support optique selon la revendication 1, **caractérisé en ce que** ladite matière polymère a une viscosité inhérente inférieure à 0,70dl/g.

3. Support optique selon la revendication 1, **caractérisé en ce que** ladite matière polymère a une viscosité inhérente comprise dans l'intervalle de 0,65 à 0,30dl/g.

4. Support optique selon la revendication 1, **caractérisé en ce que** ledit polyester est obtenu à partir de 9,9-bis (4-hydroxyphényl) fluorène et un mélange d'acide téréphthalique et d'acide isophthalique.

5. Support optique selon la revendication 4, **caractérisé en ce que** ledit mélange d'acide téréphthalique et d'acide isophthalique comprend de 20 à 80% en poids d'un groupe isophthalique et de 80 à 20% en poids d'un groupe téréphthalique.

6. Support optique selon la revendication 4, **caractérisé en ce que** ledit mélange d'acide téréphthalique et d'acide isophthalique comprend de 30 à 70% en poids d'un groupe isophthalique et de 70 à 30% en poids d'un groupe téréphthalique.
